# EUROPEAN PATENT APPLICATION

(11) **EP 4 418 724 A2**
(43) Date of publication of application: **21.08.2024**
(21) Application number: 24153117.7
(22) Date of filing: 22.01.2024
(51) Int. Cl.: H04W 24/10

(54) **MDT USER CONSENT ENHANCEMENTS FOR RAN AI/ML DATA COLLECTION**

(30) Priority: 17.02.2023 IN 202341010783
(71) Applicant: Nokia Technologies Oy, 02610 Espoo (FI)
(72) Inventor: BALASUBRAMANIAM, Sankaran, Bangalore (IN); ALWAR, Ethiraj, Bangalore (IN)
(74) Representative: Nokia EPO representatives

(57) **Abstract**

Method comprising:
monitoring whether an action related to machine learning of a machine learning model requires data from a terminal;
checking whether, according to stored configuration data, the machine learning model is embedded at a radio access network;
configuring the terminal such that the terminal collects the data in response to monitoring that the action requires the data and to checking that the machine learning model is embedded at a radio access network, irrespective of whether or not, according to stored context information, consent has been given to collect the data by the terminal.

## Description

### Technical Field

The present disclosure relates to MDT user consent, in particular in the context of RAN AI/ML data collection.

### Abbreviations

- 3GPP: 3^{rd} Generation Partnership Project
- 5G/6G/7G: 5^{th}/6^{th}/7^{th} Generation
- 5GC: 5^{th} Generation Core network
- Al: Artificial Intelligence
- AMF: Access and Mobility Function
- CN: Core Network
- gNB: next Generation NodeB
- ICS_Req: Initial Context Setup Request
- ID: Identifier
- MDT: Minimization of Drive Tests
- ML: Machine Learning
- NAS: Non-Access Stratum
- NGAP: Next Generation Application Protocol
- NG-RAN: Next Generation RAN
- OAM: Operation and Maintenance
- OMA: Open Mobile Alliance
- PLMN: Public Land Mobile Network
- RAN: Radio Access Network
- RRC: Radio Resource Control
- RRM: Radio Resource Management
- SA: System Architecture
- SDM: Subscriber Data Management
- TCE: Trace Collection Entity
- TR: Technical Report
- UDM: User Data Management
- UE: User Equipment

### Background

The Rel-17 NG-RAN AI/ML Study Item (3GPP TR 37.817) specifies the introduction of AI/ML in RAN for 3 priority use cases (Load Balancing, Energy Saving and Mobility Enhancements). The TR provides the overall framework to support these use cases and to extend for other use cases in future. The following points are mentioned in 3GPP TR 37.817:
1. It proposes 2 types of ML model training - ML model training either happening in the NG-RAN itself (also known as "RAN embedded ML Model") or happening in OAM (also known as "OAM hosted ML Model")
2. NG-RAN could collect data from the UE for 2 purposes - ML model training and getting inference from the model.
3. The MDT framework along with RRM measurements are used by the NG-RAN to collect data from UE. There could be enhancements to the conventional MDT framework.

### Summary

It is an object to improve the prior art.

According to a first aspect, there is provided an apparatus comprising:
one or more processors, and memory storing instructions that, when executed by the one or more processors, cause the apparatus to perform:
monitoring whether an action related to machine learning of a machine learning model requires data from a terminal;
checking whether, according to stored configuration data, the machine learning model is embedded at a radio access network;
configuring the terminal such that the terminal collects the data in response to monitoring that the action requires the data and to checking that the machine learning model is embedded at a radio access network, irrespective of whether or not, according to stored context information, consent has been given to collect the data by the terminal.

The instructions, when executed by the one or more processors, may further cause the apparatus to perform
inhibiting checking the context information whether or not consent has been given to collect the data by the terminal.

The instructions, when executed by the one or more processors, may further cause the apparatus to perform
checking whether or not, according to the context information, consent has been given to collect the data by the terminal at least for the action;
the configuring the terminal such that the terminal collects the data
   a) in response to checking that according to the context information, consent has not been given to collect the data at least for the action, and
   b) in response to checking that, according to the context information, consent has been given to collect the data at least for the action.

The instructions, when executed by the one or more processors, may further cause the apparatus to perform
receiving the context information from a core network;
informing the core network that the terminal is configured to collect the data in response to checking that, according to the context information, consent has not been given to collect the data.

The instructions, when executed by the one or more processors, may cause the apparatus to perform
the receiving the context information in an initial context setup request.

The instructions, when executed by the one or more processors, may further cause the apparatus to perform
informing the core network on the action along with the informing the core network that the terminal is configured to collect the data.

The instructions, when executed by the one or more processors, may further cause the apparatus to perform
monitoring whether, according to the stored configuration data, the data do not leave the radio access network for the machine learning;
inhibiting the configuring the terminal such that the terminal collects the data in response to monitoring that, according to the stored configuration data, the data may leave the radio access network for the machine learning and that, according to the context information, consent has not been given to collect the data by the terminal.

Either the radio access network may comprise an operation and maintenance system for at least one of operating or maintaining at least one node of the radio access network; or the radio access network may not comprise the operation and maintenance system for the at least one of the operating or the maintaining the at least one node of the radio access network.

According to a second aspect, there is provided an apparatus comprising:
one or more processors, and memory storing instructions that, when executed by the one or more processors, cause the apparatus to perform:
monitoring whether a core network receives an information that a terminal is configured to collect data for an action related to machine learning of a machine learning model, wherein, according to the information, the machine learning model is embedded at a radio access network;
instructing the core network to process the information that the terminal is configured to collect the data in response to monitoring that the core network receives the information that the terminal is configured to collect the data.

The instructions, when executed by the one or more processors, may further cause the apparatus to perform
monitoring whether the core network receives an information on the action;
instructing the core network to process the information on the action in response to monitoring that the core network receives the information on the action.

According to a third aspect, there is provided an apparatus comprising:
one or more processors, and memory storing instructions that, when executed by the one or more processors, cause the apparatus to perform:
monitoring whether an action related to machine learning of a machine learning model requires data from a terminal;
checking whether or not, according to context information received from a core network, consent has been given to collect the data by the terminal at least for the action;
requesting the core network to get consent to collect the data by the terminal at least for the action in response to monitoring that the action requires the data from the terminal and to checking that, according to the context information, consent has not been given to collect the data by the terminal at least for the action;
supervising whether or not first update information is received from the core network in response to the requesting the core network to get consent, wherein the first update information indicates that consent is given to collect the data by the terminal at least for the action;
configuring the terminal such that the terminal collects the data in response to supervising that the first update information is received.

The instructions, when executed by the one or more processors, may further cause the apparatus to perform
inhibiting the configuring the terminal such that the terminal collects the data in response to monitoring that the first update information is not received or that a second update information indicating that consent is not given to collect the data by the terminal is received.

The instructions, when executed by the one or more processors, may further cause the apparatus to perform
configuring the terminal such that the terminal collects the data in response to checking that, according to the context information, consent has been given to collect the data by the terminal.

The instructions, when executed by the one or more processors, may further cause the apparatus to perform
checking whether, according to stored configuration data, the machine learning model is embedded at a radio access network such that the data do not leave the radio access network for the machine learning;
the requesting the core network such that the requesting the core network comprises informing the core network that the data do not leave the radio access network for the machine learning in response to checking that, according to the stored configuration data, the machine learning model is embedded at the radio access network such that the data do not leave the radio access network for the machine learning.

The instructions, when executed by the one or more processors, may further cause the apparatus to perform
receiving the context information from the core network in an initial context setup request.

According to a fourth aspect, there is provided an apparatus comprising:
one or more processors, and memory storing instructions that, when executed by the one or more processors, cause the apparatus to perform:
monitoring whether a core network receives a request to get consent to collect data by a terminal, wherein, according to the request, the data are required for an action related to machine learning of a machine learning model;
requesting a user of the terminal to give consent to collect the data by the terminal at least for the action in response to monitoring that the core network receives the request to get consent;
checking whether the user gives consent to collect the data by the terminal at least for the action in response to the requesting the user to give consent;
providing, in response to the request to get consent, a first update information that consent is given to collect the data by the terminal at least for the action in response to checking that the user gives consent to collect the data by the terminal at least for the action.

The instructions, when executed by the one or more processors, may further cause the apparatus to perform at least one of the following in response to checking that the user does not give consent to collect the data by the terminal:
inhibiting the providing the first update information; or
providing, in response to the request to get consent, a second update information that consent is not given to collect the data by the terminal.

The instructions, when executed by the one or more processors, may further cause the apparatus to perform
providing a context information from the core network to a radio access network node prior to the monitoring whether the core network receives the request to get consent to collect the data by the terminal, wherein the context information indicates that consent is not given to collect the data by the terminal, wherein
the monitoring whether the core network receives the request to get consent comprises monitoring whether the core network receives the request to get consent from the radio access network.

The instructions, when executed by the one or more processors, may further cause the apparatus to perform
monitoring whether the request to get consent comprises an information that the data do not leave the radio access network for the machine learning;
the requesting the user of the terminal to give consent comprises informing the user of the terminal that the data do not leave the radio access network for the machine learning in response to monitoring that the request to get consent comprises the information that the data do not leave the radio access network for the machine learning.

The instructions, when executed by the one or more processors, may further cause the apparatus to perform
the providing the context information in an initial context setup request.

According to a fifth aspect, there is provided an apparatus comprising:
one or more processors, and memory storing instructions that, when executed by the one or more processors, cause the apparatus to perform:
monitoring whether an action related to machine learning of a machine learning model to be performed at a radio access network node requires data from a terminal;
checking whether, according to stored context information, consent has been given to collect the data by the terminal at least for the action;
providing a non-availability information to the radio access network node in response to monitoring that the action requires the data and to checking that, according to the context information, consent has not been given to collect the data by the terminal at least for the action, wherein the non-availability information informs that the data are not available for the action.

The instructions, when executed by the one or more processors, may further cause the apparatus to perform
supervising whether a request to perform a supporting activity for the action is received;
inhibiting the providing the non-availability information to the radio access network node in response to supervising that the request to perform the supporting activity is not received.

The instructions, when executed by the one or more processors, may further cause the apparatus to perform at least one of the following in response to supervising that the request to perform the supporting activity is not received:
inhibiting the monitoring whether the action requires the data from the terminal; or
inhibiting the checking whether, according to the context information, consent has been given to collect the data by the terminal.

The instructions, when executed by the one or more processors, may further cause the apparatus to perform
the providing the non-availability information to the radio access network node regardless of whether or not a request to perform the supporting activity is received.

The instructions, when executed by the one or more processors, may further cause the apparatus to perform
determining whether a request to perform the supporting activity is to be expected;
inhibiting the providing the non-availability information to the radio access network node in response to determining that the request to perform the supporting activity is not to be expected.

The supporting activity may comprise providing a feedback to a prior action related to the machine learning of the machine learning model performed at the radio access network node, and the action may comprise evaluating the feedback.

The instructions, when executed by the one or more processors, may further cause the apparatus to perform
receiving the context information in an initial context setup request.

According to each of the first to fifth aspects, the action may comprise at least one of the following:
- performing a first training of the machine learning model by the machine learning; or
- executing a first inference from the machine learning model after a second training of the machine learning model by the machine learning was performed; or
- evaluating a feedback to an executed second inference from the machine learning model after a third training of the machine learning model by the machine learning was performed.

According to a sixth aspect, there is provided an apparatus comprising:
one or more processors, and memory storing instructions that, when executed by the one or more processors, cause the apparatus to perform:
monitoring whether a non-availability information is received at a first radio access network node from a second radio access network node, wherein the non-availability information informs that data from a terminal are not available for an action related to machine learning of a machine learning model to be performed at the first radio access network node;
deciding whether or not to perform the action without the data from the terminal in response to monitoring that the non-availability information is received.

The instructions, when executed by the one or more processors, may further cause the apparatus to perform
supervising whether the first radio access network node requests the second radio access network node to perform a supporting activity for the action;
inhibiting the monitoring whether the non-availability information is received at the first radio access network node from the second radio access network node in response to supervising that the first radio access network node does not request the second radio access network node to perform the supporting activity for the action.

The instructions, when executed by the one or more processors, may further cause the apparatus to perform
the monitoring whether the non-availability information is received at the first radio access network node from the second radio access network node regardless of whether or not the first radio access network node requests the second radio access network node to perform a supporting activity for the action.

The instructions, when executed by the one or more processors, may further cause the apparatus to perform
determining whether the second radio access network node is to expect a request to perform the supporting activity;
inhibiting the monitoring whether the non-availability information is received at the first radio access network node from the second radio access network node in response to determining that the second radio access network node is not to expect the request to perform the supporting activity.

The supporting activity may comprise providing a feedback to a prior action related to the machine learning of the machine learning model performed at the first radio access network node, and the action may comprise evaluating the feedback.

The action may comprise evaluating a feedback to an executed inference from the machine learning model.

According to a seventh aspect, there is provided a method comprising:
monitoring whether an action related to machine learning of a machine learning model requires data from a terminal;
checking whether, according to stored configuration data, the machine learning model is embedded at a radio access network;
configuring the terminal such that the terminal collects the data in response to monitoring that the action requires the data and to checking that the machine learning model is embedded at a radio access network, irrespective of whether or not, according to stored context information, consent has been given to collect the data by the terminal.

The method may further comprise
inhibiting checking the context information whether or not consent has been given to collect the data by the terminal.

The method may further comprise
checking whether or not, according to the context information, consent has been given to collect the data by the terminal at least for the action;
the configuring the terminal such that the terminal collects the data
   a) in response to checking that according to the context information, consent has not been given to collect the data at least for the action, and
   b) in response to checking that, according to the context information, consent has been given to collect the data at least for the action.

The method may further comprise
receiving the context information from a core network;
informing the core network that the terminal is configured to collect the data in response to checking that, according to the context information, consent has not been given to collect the data.

The context information may be received in an initial context setup request.

The method may further comprise
informing the core network on the action along with the informing the core network that the terminal is configured to collect the data.

The method may further comprise
monitoring whether, according to the stored configuration data, the data do not leave the radio access network for the machine learning;
inhibiting the configuring the terminal such that the terminal collects the data in response to monitoring that, according to the stored configuration data, the data may leave the radio access network for the machine learning and that, according to the context information, consent has not been given to collect the data by the terminal.

Either the radio access network may comprise an operation and maintenance system for at least one of operating or maintaining at least one node of the radio access network; or the radio access network may not comprise the operation and maintenance system for the at least one of the operating or the maintaining the at least one node of the radio access network.

According to an eighth aspect, there is provided a method comprising:
monitoring whether a core network receives an information that a terminal is configured to collect data for an action related to machine learning of a machine learning model, wherein, according to the information, the machine learning model is embedded at a radio access network;
instructing the core network to process the information that the terminal is configured to collect the data in response to monitoring that the core network receives the information that the terminal is configured to collect the data.

The method may further comprise
monitoring whether the core network receives an information on the action;
instructing the core network to process the information on the action in response to monitoring that the core network receives the information on the action.

According to a ninth aspect, there is provided a method comprising:
monitoring whether an action related to machine learning of a machine learning model requires data from a terminal;
checking whether or not, according to context information received from a core network, consent has been given to collect the data by the terminal at least for the action;
requesting the core network to get consent to collect the data by the terminal at least for the action in response to monitoring that the action requires the data from the terminal and to checking that, according to the context information, consent has not been given to collect the data by the terminal at least for the action;
supervising whether or not first update information is received from the core network in response to the requesting the core network to get consent, wherein the first update information indicates that consent is given to collect the data by the terminal at least for the action;
configuring the terminal such that the terminal collects the data in response to supervising that the first update information is received.

The method may further comprise
inhibiting the configuring the terminal such that the terminal collects the data in response to monitoring that the first update information is not received or that a second update information indicating that consent is not given to collect the data by the terminal is received.

The method may further comprise
configuring the terminal such that the terminal collects the data in response to checking that, according to the context information, consent has been given to collect the data by the terminal.

The method may further comprise
checking whether, according to stored configuration data, the machine learning model is embedded at a radio access network such that the data do not leave the radio access network for the machine learning; wherein
the requesting the core network comprises informing the core network that the data do not leave the radio access network for the machine learning in response to checking that, according to the stored configuration data, the machine learning model is embedded at the radio access network such that the data do not leave the radio access network for the machine learning.

The method may further comprise
receiving the context information from the core network in an initial context setup request.

According to a tenth aspect, there is provided a method comprising:
monitoring whether a core network receives a request to get consent to collect data by a terminal, wherein, according to the request, the data are required for an action related to machine learning of a machine learning model;
requesting a user of the terminal to give consent to collect the data by the terminal at least for the action in response to monitoring that the core network receives the request to get consent;
checking whether the user gives consent to collect the data by the terminal at least for the action in response to the requesting the user to give consent;
providing, in response to the request to get consent, a first update information that consent is given to collect the data by the terminal at least for the action in response to checking that the user gives consent to collect the data by the terminal at least for the action.

The method may further comprise at least one of the following performed in response to checking that the user does not give consent to collect the data by the terminal:
inhibiting the providing the first update information; or
providing, in response to the request to get consent, a second update information that consent is not given to collect the data by the terminal.

The method may further comprise
providing a context information from the core network to a radio access network node prior to the monitoring whether the core network receives the request to get consent to collect the data by the terminal, wherein the context information indicates that consent is not given to collect the data by the terminal, wherein
the monitoring whether the core network receives the request to get consent comprises monitoring whether the core network receives the request to get consent from the radio access network.

The method may further comprise
monitoring whether the request to get consent comprises an information that the data do not leave the radio access network for the machine learning;
the requesting the user of the terminal to give consent comprises informing the user of the terminal that the data do not leave the radio access network for the machine learning in response to monitoring that the request to get consent comprises the information that the data do not leave the radio access network for the machine learning.

The context information may be provided in an initial context setup request.

According to an eleventh aspect, there is provided a method comprising:
monitoring whether an action related to machine learning of a machine learning model to be performed at a radio access network node requires data from a terminal;
checking whether, according to stored context information, consent has been given to collect the data by the terminal at least for the action;
providing a non-availability information to the radio access network node in response to monitoring that the action requires the data and to checking that, according to the context information, consent has not been given to collect the data by the terminal at least for the action, wherein the non-availability information informs that the data are not available for the action.

The method may further comprise
supervising whether a request to perform a supporting activity for the action is received;
inhibiting the providing the non-availability information to the radio access network node in response to supervising that the request to perform the supporting activity is not received.

The method may further comprise at least one of the following performed in response to supervising that the request to perform the supporting activity is not received:
inhibiting the monitoring whether the action requires the data from the terminal; or
inhibiting the checking whether, according to the context information, consent has been given to collect the data by the terminal.

The non-availability information may be provided to the radio access network node regardless of whether or not a request to perform the supporting activity is received.

The method may further comprise
determining whether a request to perform the supporting activity is to be expected;
inhibiting the providing the non-availability information to the radio access network node in response to determining that the request to perform the supporting activity is not to be expected.

The supporting activity may comprise providing a feedback to a prior action related to the machine learning of the machine learning model performed at the radio access network node, and the action may comprise evaluating the feedback.

The method may further comprise
receiving the context information in an initial context setup request.

In each of the seventh to tenth aspects, the action may comprise at least one of the following:
- performing a first training of the machine learning model by the machine learning; or
- executing a first inference from the machine learning model after a second training of the machine learning model by the machine learning was performed; or
- evaluating a feedback to an executed second inference from the machine learning model after a third training of the machine learning model by the machine learning was performed.

According to a twelfth aspect, there is provided a method comprising:
monitoring whether a non-availability information is received at a first radio access network node from a second radio access network node, wherein the non-availability information informs that data from a terminal are not available for an action related to machine learning of a machine learning model to be performed at the first radio access network node;
deciding whether or not to perform the action without the data from the terminal in response to monitoring that the non-availability information is received.

The method may further comprise
supervising whether the first radio access network node requests the second radio access network node to perform a supporting activity for the action;
inhibiting the monitoring whether the non-availability information is received at the first radio access network node from the second radio access network node in response to supervising that the first radio access network node does not request the second radio access network node to perform the supporting activity for the action.

The monitoring whether the non-availability information is received at the first radio access network node from the second radio access network node may be performed regardless of whether or not the first radio access network node requests the second radio access network node to perform a supporting activity for the action.

The method may further comprise
determining whether the second radio access network node is to expect a request to perform the supporting activity;
inhibiting the monitoring whether the non-availability information is received at the first radio access network node from the second radio access network node in response to determining that the second radio access network node is not to expect the request to perform the supporting activity.

The supporting activity may comprise providing a feedback to a prior action related to the machine learning of the machine learning model performed at the first radio access network node, and the action may comprise evaluating the feedback.

The action may comprise evaluating a feedback to an executed inference from the machine learning model.

Each of the methods of the seventh to twelfth aspects may be a method of user consent enhancement.

According to a thirteenth aspect, there is provided a computer program product comprising a set of instructions which, when executed on an apparatus, is configured to cause the apparatus to carry out the method according to any of the seventh to twelfth aspects. The computer program product may be embodied as a computer-readable medium or directly loadable into a computer.

According to some example embodiments, at least one of the following advantages may be achieved:
- RAN embedded machine learning may be performed with all necessary data from UEs;
- Missing user's consent may be respected.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred example embodiments which is to be taken in conjunction with the appended drawings, wherein:
Fig. 1 shows a message flow according to 3GPP TR 37.817
Fig. 2 shows a high level message flow according to an example embodiment;
Fig. 3 shows a message flow according to an example embodiment;
Fig. 4 shows a message flow according to an example embodiment;
Fig. 5 shows a message flow according to an example embodiment;
Fig. 6 shows an apparatus according to an example embodiment;
Fig. 7 shows a method according to an example embodiment;
Fig. 8 shows an apparatus according to an example embodiment;
Fig. 9 shows a method according to an example embodiment; and
Fig. 10 shows an apparatus according to an example embodiment.

### Detailed description of certain embodiments

Herein below, certain example embodiments are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

The present disclosure is related to a RAN embedded ML Model. In particular, some example embodiments may be related to a RAN embedded ML model where the data used for training, inference, and/or feedback do not leave the RAN.

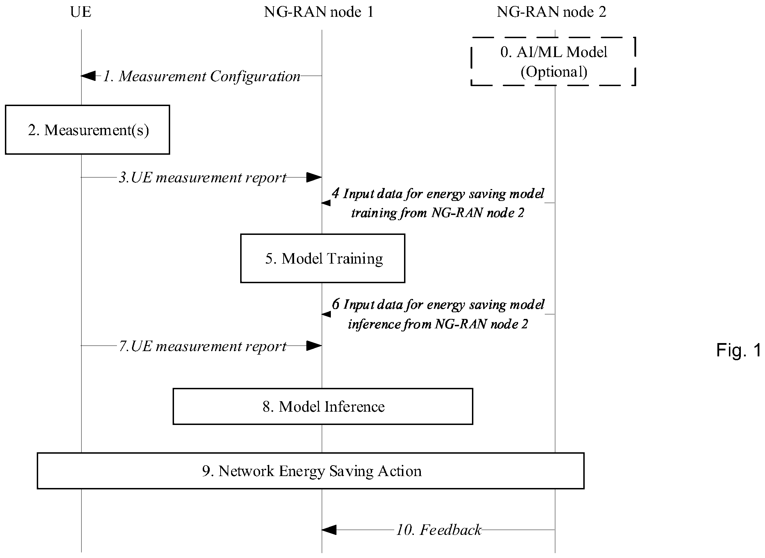

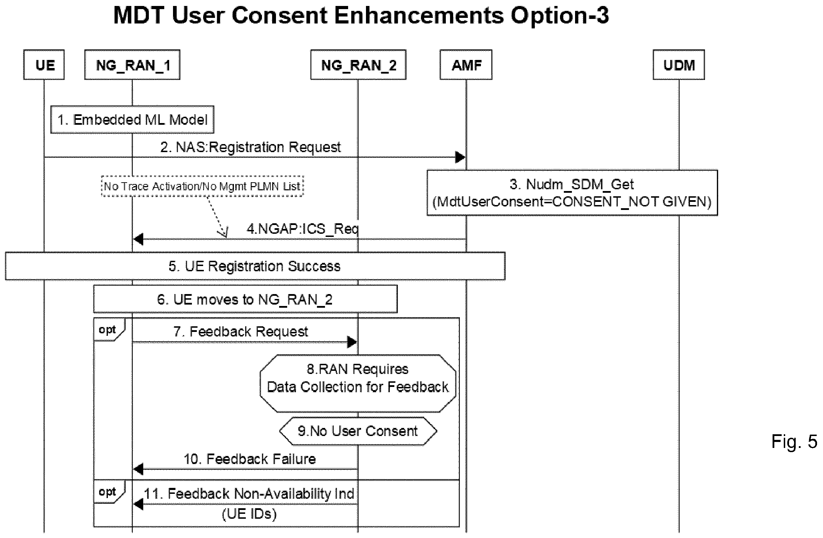

Fig. 1 shows a call flow according to 3GPP TR 37.817, Fig. 5.1.2.2-1. In the call flow, the involvement of NG-RAN node 2 (steps 4, 6, and 10) is optional. In detail, the call flow in Fig. 1 is as follows:
Step 0: NG-RAN node 2 is assumed to have an AI/ML model optionally, which can provide NG-RAN node 1 with input information.
Step 1: NG-RAN node 1 configures the measurement information on the UE side and sends configuration message to UE to perform measurement procedure and reporting.
Step 2: The UE collects the indicated measurement(s), e.g., UE measurements related to RSRP, RSRQ, SINR of serving cell and neighbouring cells.
Step 3: The UE sends the measurement report(s) to NG-RAN node 1 including the required measurement result.
Step 4: NG-RAN node 2 sends the required input data to NG-RAN node 1 for model training of AI/ML-based network energy saving.
Step 5: NG-RAN node 1 trains AI/ML model (e.g. for AI/ML-based energy saving) based on collected data. NG-RAN node 2 is assumed to have AI/ML model (e.g. for AI/ML-based energy saving) optionally, which can also generate predicted results/actions.
Step 6: NG-RAN node 2 sends the required input data to NG-RAN node 1 for model inference of AI/ML-based network energy saving.
Step 7: UE sends the UE measurement report(s) to NG-RAN node 1.
Step 8: Based on local inputs of NG-RAN node 1 and received inputs from NG-RAN node 2, NG-RAN node 1 generates model inference output (e.g., energy saving strategy, handover strategy, etc).
Step 9: NG-RAN node 1 executes Network energy saving actions according to the model inference output. For example, NG-RAN node 1 may select the most appropriate target cell for each UE before it performs handover, if the output is handover strategy.
Step 10: NG-RAN node 2 provides feedback on the inference effected by NG-RAN node 1 to NG-RAN node 1.

NG-RAN node 1 may select one, all or a subset of served UEs to get measurements for ML model training and/or inference in step 3 and step 7, respectively. The UE selection is done by RAN as it hosts the model, has the training/inference algorithm, and knows the set of UEs whose data is going to be helpful.

On the other hand, the selection of UEs for enabling MDT logging is controlled by the 5GC. There is a user consent attribute stored in the UDM as part of each UE's subscription data, as shown in the Table 1:

**Table 1: Enumeration MdtUserConsent**

| Enumeration value | Description |
|---|---|
| "CONSENT_NOT_GIVEN" | It shall indicate the user has not given his consent for MDT activation |
| "CONSENT_GIVEN" | It shall indicate the user has given his consent for MDT activation |

During the registration of the UE, the AMF gets the user consent value from UDM. If this user consent value = "CONSENT_GIVEN", AMF provides a list of PLMNs on which MDT can be activated for a given UE to the NG-RAN (also denoted as management MDT activation (see 3GPP TS 32.422, clause 4.1.1.9.2); the actual MDT configuration is given by RAN-OAM)
NG-RAN shall enable MDT only on those UEs where user consent is signalled to NG-RAN by the 5GC

If the NG-RAN selects a UE for enabling MDT (for AIML purposes), it cannot override the value/guidance given by the 5GC conventionally. This means that the required data from that UE cannot be got by the NG-RAN if the user of this UE has not given his consent. This could impair the overall model training performance or the inference.

In the current MDT framework, the final consumer of the measurements is the TCE, which may be outside of the RAN - hence, the user consent becomes paramount. However, in case of a RAN embedded ML model, the final consumer of the UE measurements is the RAN. In one approach, from the user consent's perspective, the MDT measurements for a RAN embedded ML model may be considered similarly as the RRM measurements initiated by the RAN conventionally. Namely, the RRM measurements do not require any user consent. However, even though the MDT measurements for a RAN embedded ML model are handled similarly to RRM measurements (which do not require explicit user consent), it may be disputed if the same approach can be taken for measurements required for a RAN embedded ML model as for RRM measurements. For example, users may not understand the difference between a RAN embedded ML model and a ML model at a TCE outside the RAN but potentially within the domain of the operator.

Accordingly, some example embodiments are applicable to an ML model hosted in the NG-RAN and Management based MDT activation. Configuration data in the RAN may indicate whether or not a ML model is a RAN embedded ML model and optionally whether or not the UE data used for training/inference/feedback do not leave the RAN. In the present context, in some example embodiments, RAN OAM may be considered as a part of RAN, while in other example embodiments RAN OAM may be considered as outside RAN.

Some example embodiments provide one or more of the following options:
Option 1: If a NG-RAN node determines that data have to be collected from a UE using Management based MDT, NG-RAN node ignores that it has not received any UE consent value from 5GC (or that the user consent value for this UE is "CONSENT_NOT_GIVEN") and starts the MDT session, regardless of the UE consent value, if any. In addition, it may inform the 5GC about the activation of the MDT session at the UE. For example, for the informing, NG-RAN node may use a new NGAP procedure, or an existing NGAP procedure may be adapted.
Option 2: If NG-RAN node determines that data have to be collected from a UE using Management based MDT and the user consent value for this UE is "CONSENT_NOT_GIVEN", NG-RAN node requests the 5GC to get the user consent. If/when 5GC gets the user content, it informs NG-RAN node accordingly, and in this case, NG-RAN node starts the MDT session at the UE. If 5GC does not get the user content upon request, and/or if NG-RAN node is not informed that 5GC got user consent, NG-RAN node does not start the MDT session at the UE..
Option 3: If NG-RAN node 2 (e.g. a target node of a handover procedure) determines that data have to be collected from a UE using Management based MDT and the user consent value for this UE is "CONSENT_NOT_GIVEN", NG-RAN node 2 informs one or more neighbouring NG-RAN nodes 1 (e.g. a source node of the handover procedure) over Xn interface (interface between the NG-RAN nodes) that it is unable to collect the data from this UE because of the lack of user consent. On the other hand, if the user consent value for this UE is "CONSENT GIVEN", NG-RAN node 2 configures the requested MDT measurements in the UE, collects the measurement results, and provides them to the one or more neighbouring NG-RAN nodes 1.

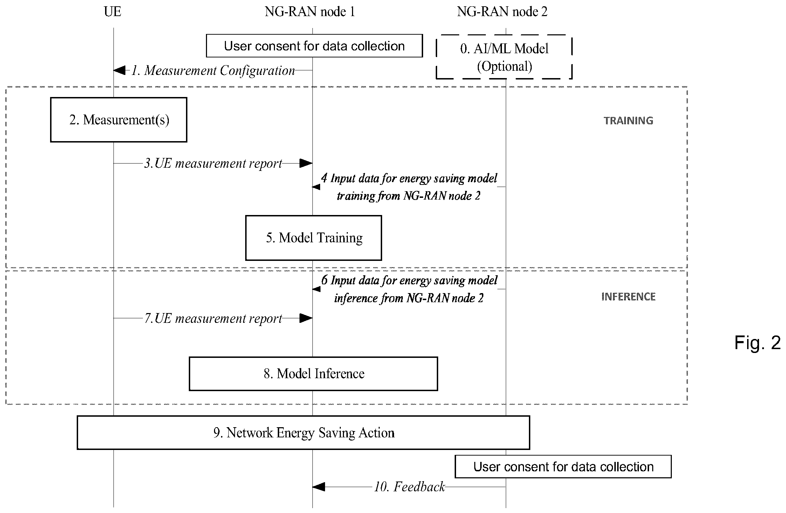

Fig. 2 shows, by the boxes "User consent for data collection", where the call flow of Fig. 1 may be enhanced by the respective action(s) of one of options 2 and 3. Namely, user consent may be checked (and requested, for option 2) for collecting the MDT measurements from the UE for ML model training, or for ML model inference, or for providing feedback to a previous ML model inference (by a neighbour RAN node) ("opportunities"). Option 2 outlined hereinabove may be applied to each of the boxes "User consent for data collection" in Fig. 2, i.e. there are 3 different combinations of opportunities for a "User consent for data collection" and the activities according to the option 2. Option 1 (ignoring whether or not the NG-RAN node has received user consent for data collection) may be applied to each of the three opportunities, too. Option 3 is related to opportunity 3. Thus, there are 7 combinations of options and opportunities in total.

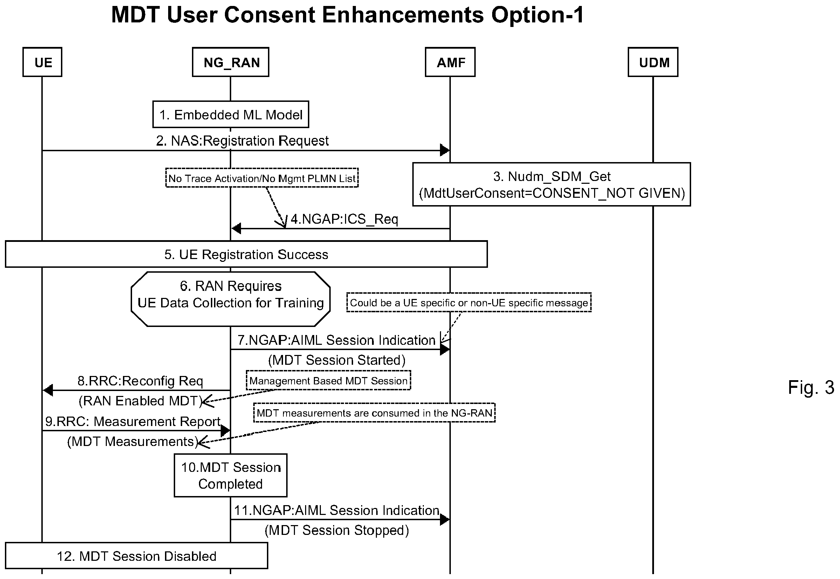

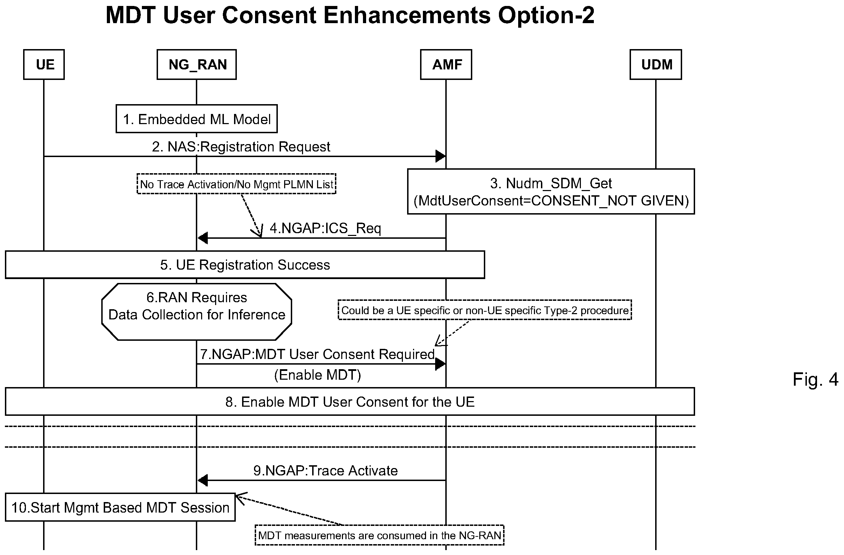

Hereinafter, three of the combinations of opportunity and option are described in detail, namely
- applying option 1 to opportunity 1 (data collection for training), see Fig. 3;
- applying option 2 to opportunity 2 (data collection for inference), see Fig. 4; and
- applying option 3 to opportunity 3 (data collection for providing feedback), see Fig. 5.

The other combinations of opportunity and option are explained only shortly after the detailed explanation of the respective opportunity.

Each of the opportunities is related to an action related to machine learning of the RAN embedded ML model, wherein
- for opportunity 1, the action is performing the training of the ML model;
- for opportunity 2, the action is executing ML model inference of the trained ML model;
- for opportunity 3, the action is evaluating feedback to executing ML model inference of the trained ML model.

For opportunity 3, a supporting activity may be involved. The supporting activity comprises providing a feedback to a prior action (e.g. executing ML model inference) related to the machine learning of the machine learning model.

Fig. 3 shows a message flow according to an example embodiment, related to the combination of the first opportunity and option 1. The actions in Fig. 3 are as follows:
1. A RAN embedded ML model is set up in the NG-RAN node.
2. The UE requests to register at the CN (5GC, represented by AMF).
3. Upon receipt of the registration request of the UE, AMF requests subscription data from UDM. The subscription data indicate that the user did not give consent to MDT measurements, irrespective of the action (opportunity) for which the MDT measurements are required. In some example embodiments, optionally, the user consent may be specific for each of the following actions in the context of AI/ML models (corresponding to the opportunities discussed with respect to Fig. 2): training, inference, and feedback.
4. AMF provides initial context to NG-RAN node. The initial context informs the NG-RAN node that MDT measurements must not be activated. In detail, in some example embodiments, the initial context does not comprise any list of PLMNs where MDT measurements may be activated. However, in some example embodiments, the initial context may comprise an explicit indication that MDT measurements must not be activated.
5. The UE is successfully registered.

Actions 1 to 5 are the same for each of the example embodiments of Figs. 3 to 5. The following actions are specific for the combination of option 1 with the opportunity 1 of collecting data for training.
6. The NG-RAN node determines that MDT data from the UE are required for training of the ML model.
7. According to option 1, NG-RAN node ignores that the NG-RAN node has not received user consent to collect MDT data (either because it has not received information on user consent from 5GC, or because the user consent value for this UE is "CONSENT NOT GIVEN"). Accordingly, NG-RAN node informs AMF that it started a MDT session related to the RAN embedded ML model. NG RAN node may additionally inform AMF on the action (here: training; other actions may be inference or feedback) for which the MDT session was started at the UE. The message may be specific for the UE or non-UE specific (i.e. a message comprising a list of one or more UE IDs for which RAN starts a MDT session). For example, the message may be NGAP: AIML MDT Session Indication with cause = MDT Session Started, and comprises RAN UE NGAP ID.
8. NG-RAN node configures and activates the MDT measurements in the UE, for example by a RRC reconfiguration message.

The sequence of actions 7 and 8 is arbitrary. They may be performed fully or partly in parallel.
9. UE provides a measurement report of the MDT measurements to NG-RAN node.
10. NG_RAN node decides that the MDT session is completed, i.e. that it has sufficient MDT data from the UE.
11. Correspondingly to action 7, NG-RAN node informs AMF that the MDT session is stopped, e.g. by NGAP: AIML MDT Session Indication with cause = MDT Session Stopped, comprising the RAN UE NGAP ID. Actions 7 and 11 are optional.
12. NG-RAN node disables the MDT session at the UE.

The sequence of actions 11 and 12 is arbitrary. They may be performed fully or partly in parallel.

If the call flow of Fig. 3 comprises the actions 7 and 11 (i.e. NG-RAN node informs AMF that the MDT session at the UE is started/stopped), CN (e.g. AMF) may use these message for its own purposes. For example, 5GC may use this information to prioritize any other MDT session for the UE that it may want to start.

If the NG-RAN node applies the option 2 to the opportunity of data collection for training the ML model, NG-RAN node requests the CN to provide the user consent in action 7, as explained with respect to actions 7 and 8 *et seq.* of Fig. 4.

Fig. 4 shows a message flow according to an example embodiment, related to the combination of the second opportunity and option 2. In Fig. 4, it is assumed that the RAN embedded ML model has been trained before. Actions 1 to 5 of Fig. 4 are the same as actions 1 to 5 of Fig. 3, and a replication of their description is omitted. The following actions in Fig. 4 are as follows:
6. NG-RAN node requires MDT data of the UE for ML model inference.
7. Since NG-RAN knows from the UE context that the user of the UE has not given consent to collect MDT data, NG-RAN node requests CN (AMF) to get the user's consent. For example, NG-RAN node may send the message NGAP: MDT User Consent Required with cause = Enable MDT and RAN UE NGAP ID. NG RAN node may additionally inform AMF on the action (here: inference; other actions may be training or feedback) for which the MDT session was started at the UE. Then, NG-RAN node waits for the user consent notification from the Core (action 9).
8. AMF attempts to get the user's consent. For example, it may involve UDM, NG-RAN and UE for this purpose. For example, AMF may send a message to UE requesting the user's consent, for example by a suitable application protocol (OMA based, for example). If the user gives consent, the same may be stored in the subscription data in the UDM
9. In Fig. 4, it is assumed that the user gives consent. Therefore, AMF informs NG-RAN node accordingly. E.g., AMF may update the context of the UE using NGAP signalling. In an example, AMF may provide a list of PLMN(s) including the PLMN of the NG-RAN node for which the user gave consent to MDT measurements.

If the user does not give consent, AMF may inform NG-RAN node accordingly, or may not send any respective message to NG-RAN node. Thus, the UE context stored at NG-RAN remains "CONSENT_NOT-GIVEN". 10. Since the user gave consent, NG-RAN node initiates the management based MDT session.

If the NG-RAN node applies the option 1 to the opportunity of data collection for ML model inference, in action 7, NG-RAN node initiates the MDT data collection and may inform CN thereabout, as explained with respect to actions 7 and 8 *et seq.* of Fig. 3.

Note that the option 2 may be applicable not only to RAN embedded ML models but generally to ML models. If the ML model is RAN embedded, RAN may inform CN thereon, and CN may then inform the user thereon when CN requests the consent from the user. In particular, if the data do not leave RAN, RAN may inform thereon, too, and CN may inform the user accordingly when CN requests the consent from the user.

Fig. 5 shows a message flow according to an example embodiment, related to the combination of the third opportunity and option 3. In Fig. 5, it is assumed that the NG-RAN node 1 executed ML model inference of the RAN embedded ML model before action 6. Actions 1 to 5 of Fig. 4 are the same as actions 1 to 5 of Fig. 3, and a replication of their description is omitted. According to action 6, the UE moves from NG-RAN node 1 to NG-RAN node 2.

Fig. 5 comprises two sub-options:
- sub-option a: Actions 7 to 10; and
- sub-option b: Action 11.

The actions of each of these sub-options may follow the action 6.

The actions of the sub-option a are as follows:
7. Since NG-RAN node 1 would like to get feedback for the ML model inference from NG-RAN node 2, NG-RAN node 1 requests NG-RAN node 2 for the feedback.
8. NG-RAN node 2 determines that it requires MDT data of the UE to provide the feedback. As an alternative option, the feedback request of action 7 may comprise an indication that the feedback should be based (at least partly) on MDT data of the UE.
9. NG-RAN node 2 determines from the stored context that the user of the UE has not given consent to MDT data collection.
10. NG-RAN node 2 informs NG-RAN node 1 that NG-RAN node 2 cannot provide the requested feedback. For example, it may provide a cause "No MDT User Consent".

The action of the sub-option b (following the action 6) is as follows:
11. NG-RAN node 2 need not to wait for the feedback request. Rather, on its own, NG-RAN node 2 may identify those UEs without MDT user consent and inform NG-RAN node 1 that it is unable to provide the feedback for these UEs.

Optionally, NG-RAN node 2 may determine whether a feedback request is to be expected because NG-RAN node 1 executed ML model inference. If a feedback request is not expected, NG-RAN node 2 may not inform NG-RAN node 1 that it is unable to provide the feedback for these UEs.

For both sub-options, NG-RAN node 1 and/or NG-RAN node 2 may also inform locally its own OAM (through raising an alarm, for example) for the operator to take any corrective action.

If NG-RAN node 1 gets informed that NG-RAN node 2 cannot provide the requested feedback, NG-RAN node 1 may decide whether or not to perform the feedback evaluation without the data of the UE(s) from which data are not available.

If NG-RAN node 2 determines in action 9 or 11 that the user gave consent to MDT data collection, NG-RAN node 2 configures the UE accordingly, collects the data, and provides them to NG-RAN node 1, via Xn interface (not shown in Fig. 5).

If option 1 is applied to the opportunity 3 (providing feedback), instead of action 7 and action 11, respectively, NG-RAN node 2 activates MDT drive measurements at the UE although user consent is not given (or information on user consent is not available at NG-RAN node 2), same as actions 7 and 8 of Fig. 3. Thus, NG-RAN node 2 may provide the requested feedback.

If option 2 is applied to opportunity 3 (providing feedback), instead of action 7 and action 11, respectively, NG-RAN node 2 requests CN to get the user's consent, same as action 7 of Fig. 4. If the user gives consent, NG-RAN node 2 activates MDT data collection at the UE and may provide the requested feedback. If the user does not give consent, NG-RAN node 2 provides to NG-RAN node 1 the failure message of action 10 and action 11 of Fig. 5, respectively.

In a comparison of options 1 to 3,
- Option 1 has the maximum impact on conventional MDT architecture, but ensures that the RAN can always get the required user data. It falls on the precedence of RRM measurements which work today without user consent.
- Option 2 is an intermediate approach, which may rely on the conventional MDT architecture, but it cannot guarantee that MDT measurements are always available or always available in time.
- Option 3 may be used as a fallback option for the opportunity 3.

Option 1 has the advantage that NG-RAN doesn't wait for any real user consent for RAN initiated MDT session. This could enable data collection for all the different AIML applications (current/planned) which are hosted in the NG-RAN. Option 2 has the advantage that it aligns with the current MDT user consent requirement and enables the NG-RAN to request for enabling user consent by the core. Once the user consent is got, it is communicated to the RAN. Option 3 has the advantage that it is fully based on current MDT architecture.

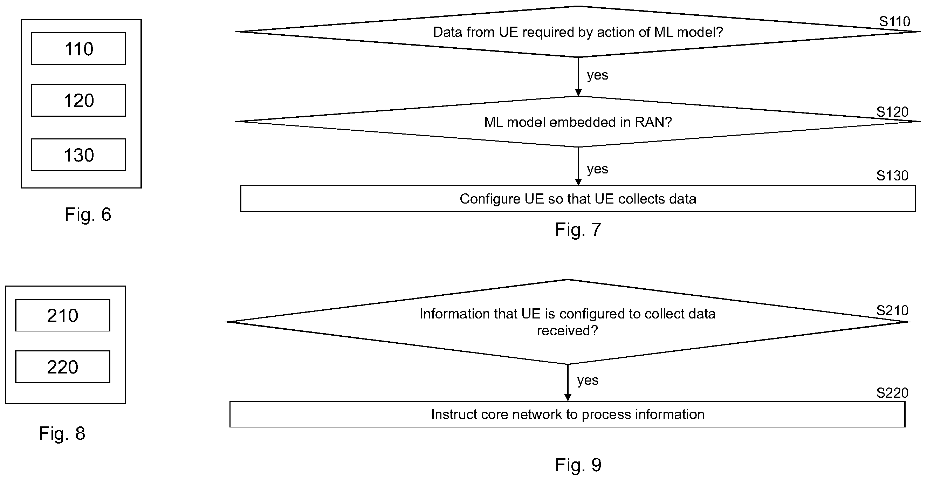

Fig. 6 shows an apparatus according to an example embodiment. The apparatus may be base station (e.g. eNB or gNB) or an element thereof. Fig. 7 shows a method according to an example embodiment. The apparatus according to Fig. 6 may perform the method of Fig. 7 but is not limited to this method. The method of Fig. 7 may be performed by the apparatus of Fig. 6 but is not limited to being performed by this apparatus.

The apparatus comprises means for monitoring 110, means for checking 120, and means for configuring 130. The means for monitoring 110, means for checking 120, and means for configuring 130 may be a monitoring means, checking means, and configuring means, respectively. The means for monitoring 110, means for checking 120, and means for configuring 130 may be a monitor, checker, and configurator, respectively. The means for monitoring 110, means for checking 120, and means for configuring 130 may be a monitoring processor, checking processor, and configuring processor, respectively.

The means for monitoring 110 monitors whether an action related to machine learning of a machine learning model requires data from a terminal (S110). The means for checking 120 checks whether, according to stored configuration data, the machine learning model is embedded at a radio access network (S120). The radio access network may or may not comprise its OAM system.

S110 and S120 may be performed in an arbitrary sequence. They may be performed fully or partly in parallel.

In response to monitoring that the action requires the data (S110 = yes) and to checking that, according to the stored configuration data, the machine learning model is embedded at a radio access network (S120 = yes), the means for configuring 130 configures the terminal such that the terminal collects the data (S130). In detail, the means for configuring 130 configures the terminal to collect the data irrespective of whether or not, according to stored context information, consent has been given to collect the data by the terminal.

In some particular example embodiments, it is additionally monitored whether, according to the stored configuration data, the data do not leave the radio access network for the machine learning. In response to monitoring that, according to the stored configuration data, the data may leave the radio access network for the machine learning and that, according to the context information, consent has not been given to collect the data by the terminal, the configuring the terminal such that the terminal collects the data may be inhibited. I.e., in this case, the terminal is not configured to collect the data. Otherwise, the terminal may potentially be configured to collect the data, depending on whether or not other conditions for this configuration of the terminal are fulfilled.

Fig. 8 shows an apparatus according to an example embodiment. The apparatus may be core network (represented by an AMF, for example) or an element thereof. Fig. 9 shows a method according to an example embodiment. The apparatus according to Fig. 8 may perform the method of Fig. 9 but is not limited to this method. The method of Fig. 9 may be performed by the apparatus of Fig. 8 but is not limited to being performed by this apparatus.

The apparatus comprises means for monitoring 210 and means for instructing 220. The means for monitoring 210 and means for instructing 220 may be a monitoring means and instructing means, respectively. The means for monitoring 210 and means for instructing 220 may be a monitor, and instructor, respectively. The means for monitoring 210 and means for instructing 220 may be a monitoring processor and instructing processor, respectively.

The means for monitoring 210 monitors whether a core network receives an information that a terminal is configured to collect data for an action related to machine learning of a machine learning model (S210). According to the received information, the ML model is embedded at a radio access network,

In response to monitoring that the core network receives the information that the terminal is configured to collect the data (S210 = yes), the means for instructing 220 instructs the core network to process the information (S220).

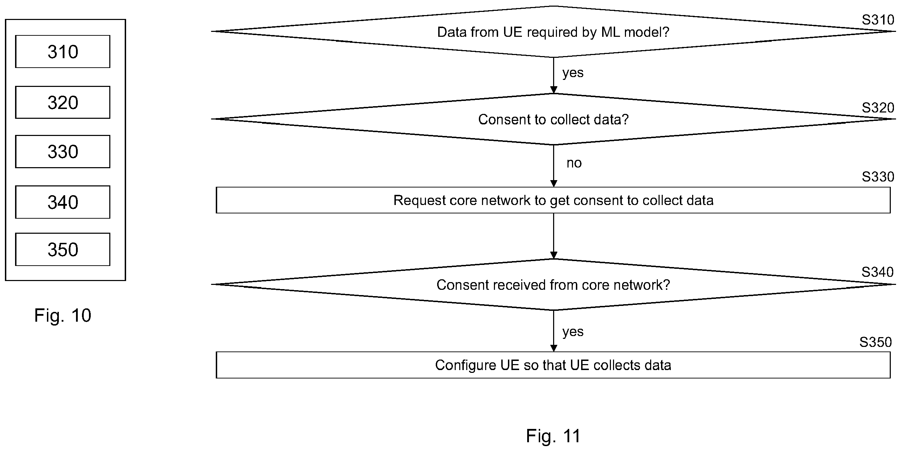

Fig. 10 shows an apparatus according to an example embodiment. The apparatus may be base station (e.g. eNB or gNB) or an element thereof. Fig. 11 shows a method according to an example embodiment. The apparatus according to Fig. 10 may perform the method of Fig. 11 but is not limited to this method. The method of Fig. 11 may be performed by the apparatus of Fig. 10 but is not limited to being performed by this apparatus.

The apparatus comprises means for monitoring 310, means for checking 320, means for requesting 330, means for supervising 340, and means for configuring 350. The means for monitoring 310, means for checking 320, means for requesting 330, means for supervising 340, and means for configuring 350 may be a monitoring means, checking means, requesting means, supervising means, and configuring means, respectively. The means for monitoring 310, means for checking 320, means for requesting 330, means for supervising 340, and means for configuring 350 may be a monitor, checker, requester, supervisor, and configurator, respectively. The means for monitoring 310, means for checking 320, means for requesting 330, means for supervising 340, and means for configuring 350 may be a monitoring processor, checking processor, requesting processor, supervising processor, and configuring processor, respectively.

The means for monitoring 310 monitors whether an action related to machine learning of a machine learning model requires data from a terminal (S310). The means for checking 320 checks whether or not, according to context information received from a core network, consent has been given to collect the data by the terminal, at least for the action (S320).

S310 and S320 may be performed in an arbitrary sequence. They may be performed fully or partly in parallel.

In response to monitoring that the action requires the data from the terminal (S310 = yes) and to checking that, according to the context information, consent has not been given to collect the data by the terminal at least for the action (S320 = no), the means for requesting 330 requests the core network to get consent to collect the data by the terminal at least for the action (S330).

The means to supervising 340 supervises whether or not first update information is received from the core network in response to the requesting the core network to get consent (S340). The first update information indicates that consent is given to collect the data by the terminal at least for the action. In response to supervising that the first update information is received (S340 = yes), the means for configuring 350 configures the terminal such that the terminal collects the data (S350).

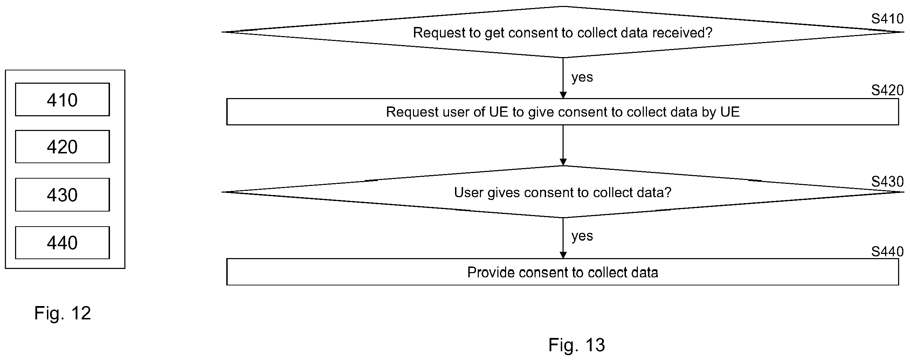

Fig. 12 shows an apparatus according to an example embodiment. The apparatus may be core network (represented by an AMF, for example) or an element thereof. Fig. 13 shows a method according to an example embodiment. The apparatus according to Fig. 12 may perform the method of Fig. 13 but is not limited to this method. The method of Fig. 13 may be performed by the apparatus of Fig. 12 but is not limited to being performed by this apparatus.

The apparatus comprises means for monitoring 410, means for requesting 420, means for checking 430, and means for providing 440. The means for monitoring 410, means for requesting 420, means for checking 430, and means for providing 440 may be a monitoring means, requesting means, checking means, and providing means, respectively. The means for monitoring 410, means for requesting 420, means for checking 430, and means for providing 440 may be a monitor, requester, checkor, and provider, respectively. The means for monitoring 410, means for requesting 420, means for checking 430, and means for providing 440 may be a monitoring processor, requesting processor, checking processor, and providing processor, respectively.

The means for monitoring 410 monitors whether a core network receives a request to get consent to collect data by a terminal (S410). According to the request, the data are required for an action related to machine learning of a machine learning model.

In response monitoring that the core network receives the request to get consent (S410 = yes), the means for requesting 420 request a user of the terminal to give consent to collect the data by the terminal at least for the action (S420). The means for checking 430 checks whether the user gives consent to collect the data by the terminal at least for the action in response to the requesting the user to give consent (S430).

In response to checking that the user gives consent to collect the data by the terminal at least for the action (S430 = yes), the means for providing 440 provides, in response to the request to get consent of S410, an update information (S440). The update information informs that consent is given to collect the data by the terminal at least for the action.

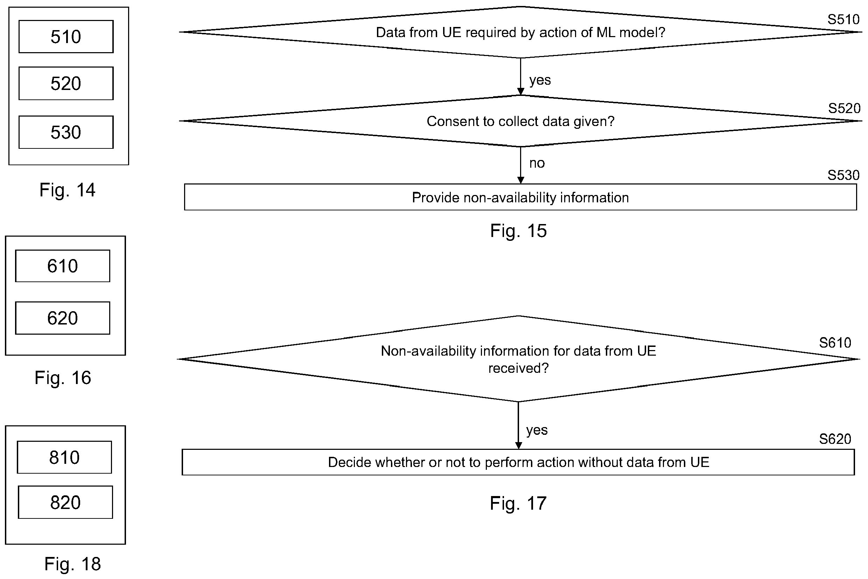

Fig. 14 shows an apparatus according to an example embodiment. The apparatus may be base station (e.g. eNB or gNB) or an element thereof. Fig. 15 shows a method according to an example embodiment. The apparatus according to Fig. 14 may perform the method of Fig. 15 but is not limited to this method. The method of Fig. 15 may be performed by the apparatus of Fig. 14 but is not limited to being performed by this apparatus.

The apparatus comprises means for monitoring 510, means for checking 520, and means for providing 530. The means for monitoring 510, means for checking 520, and means for providing 530 may be a monitoring means, checking means, and providing means, respectively. The means for monitoring 510, means for checking 520, and means for providing 530 may be a monitor, checker, and provider, respectively. The means for monitoring 510, means for checking 520, and means for providing 530 may be a monitoring processor, checking processor, and providing processor, respectively.

The means for monitoring 510 monitors whether an action related to machine learning of a machine learning model to be performed at a radio access network node requires data from a terminal (S510). The means for checking 520 checks whether, according to stored context information, consent has been given to collect the data by the terminal at least for the action (S520).

S510 and S520 may be performed in an arbitrary sequence. They may be performed fully or partly in parallel.

In response to monitoring that the action requires the data (S510 = yes) and to checking that, according to the context information, consent has not been given to collect the data by the terminal at least for the action (S520 = no), the means for providing 530 provides a non-availability information to the radio access network node (S530). The non-availability information informs that the data are not available for the action.

Fig. 16 shows an apparatus according to an example embodiment. The apparatus may be base station (e.g. eNB or gNB) or an element thereof. Fig. 17 shows a method according to an example embodiment. The apparatus according to Fig. 16 may perform the method of Fig. 17 but is not limited to this method. The method of Fig. 17 may be performed by the apparatus of Fig. 16 but is not limited to being performed by this apparatus.

The apparatus comprises means for monitoring 610 and means for deciding 620. The means for monitoring 610 and means for deciding 620 may be a monitoring means and deciding means, respectively. The means for monitoring 610 and means for deciding 620 may be a monitor, and decider, respectively. The means for monitoring 610 and means for deciding 620 may be a monitoring processor and deciding processor, respectively.

The means for monitoring 610 whether a non-availability information is received at a first radio access network node from a second radio access network node (S610). The non-availability information informs that data from a terminal are not available for an action related to machine learning of a machine learning model to be performed at the first radio access network node.

In response to monitoring that the non-availability information is received (S610 = yes), the means for deciding 620 decides whether or not to perform the action without the data from the terminal (S620).

Fig. 18 shows an apparatus according to an example embodiment. The apparatus comprises at least one processor 810, at least one memory 820 storing instructions that, when executed by the at least one processor 810, cause the apparatus at least to perform the method according to at least one of the following figures and related description: Fig. 7, or Fig. 9, or Fig. 11, or Fig. 13, or Fig. 15, or Fig. 17.

Unless otherwise stated, a "RAN" may be represented by a base station, also denoted RAN node (such as a eNB or gNB). A RAN may comprise one or more cells, and may be represented by the respective components of the RAN node.

Some example embodiments are explained with respect to a 5G network. However, the invention is not limited to 5G. It may be used in other communication networks, too, e.g. in previous of forthcoming generations of 3GPP networks such as 4G, 6G, or 7G, etc.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality. The same applies correspondingly to the terminal.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example provide, for example, a base station of a radio access network (such as a eNB or gNB) or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments provide, for example, a element of a core network (such as an AMF or an element thereof) or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments. However, it should be noted that the description of the preferred example embodiments is given by way of example only and that various modifications may be made without departing from the scope of the invention as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

## Claims

1. Apparatus comprising:
one or more processors, and memory storing instructions that, when executed by the one or more processors, cause the apparatus to perform:
monitoring whether an action related to machine learning of a machine learning model requires data from a terminal;
checking whether, according to stored configuration data, the machine learning model is embedded at a radio access network;
configuring the terminal such that the terminal collects the data in response to monitoring that the action requires the data and to checking that the machine learning model is embedded at a radio access network, irrespective of whether or not, according to stored context information, consent has been given to collect the data by the terminal.

2. The apparatus according to claim 1, wherein the instructions, when executed by the one or more processors, further cause the apparatus to perform
inhibiting checking the context information whether or not consent has been given to collect the data by the terminal.

3. The apparatus according to claim 1, wherein the instructions, when executed by the one or more processors, further cause the apparatus to perform
checking whether or not, according to the context information, consent has been given to collect the data by the terminal at least for the action;
the configuring the terminal such that the terminal collects the data
c) in response to checking that according to the context information, consent has not been given to collect the data at least for the action, and
d) in response to checking that, according to the context information, consent has been given to collect the data at least for the action.

4. The apparatus according to any of claims 1 to 3, wherein the instructions, when executed by the one or more processors, further cause the apparatus to perform
receiving the context information from a core network;
informing the core network that the terminal is configured to collect the data in response to checking that, according to the context information, consent has not been given to collect the data.

5. The apparatus according to any of claims 1 to 4, wherein the instructions, when executed by the one or more processors, further cause the apparatus to perform
monitoring whether, according to the stored configuration data, the data do not leave the radio access network for the machine learning;
inhibiting the configuring the terminal such that the terminal collects the data in response to monitoring that, according to the stored configuration data, the data may leave the radio access network for the machine learning and that, according to the context information, consent has not been given to collect the data by the terminal.

6. The apparatus according to any of claims 1 to 5, wherein either
the radio access network comprises an operation and maintenance system for at least one of operating or maintaining at least one node of the radio access network; or
the radio access network does not comprise the operation and maintenance system for the at least one of the operating or the maintaining the at least one node of the radio access network.

7. Apparatus comprising:
one or more processors, and memory storing instructions that, when executed by the one or more processors, cause the apparatus to perform:
monitoring whether an action related to machine learning of a machine learning model to be performed at a radio access network node requires data from a terminal;
checking whether, according to stored context information, consent has been given to collect the data by the terminal at least for the action;
providing a non-availability information to the radio access network node in response to monitoring that the action requires the data and to checking that, according to the context information, consent has not been given to collect the data by the terminal at least for the action, wherein the non-availability information informs that the data are not available for the action.

8. The apparatus according to claim 7, wherein the instructions, when executed by the one or more processors, further cause the apparatus to perform
supervising whether a request to perform a supporting activity for the action is received;
inhibiting the providing the non-availability information to the radio access network node in response to supervising that the request to perform the supporting activity is not received.

9. The apparatus according to claim 8, wherein the instructions, when executed by the one or more processors, further cause the apparatus to perform at least one of the following in response to supervising that the request to perform the supporting activity is not received:
inhibiting the monitoring whether the action requires the data from the terminal; or
inhibiting the checking whether, according to the context information, consent has been given to collect the data by the terminal.

10. The apparatus according to claim 7, wherein the instructions, when executed by the one or more processors, cause the apparatus to perform
the providing the non-availability information to the radio access network node regardless of whether or not a request to perform the supporting activity is received.

11. The apparatus according to claim 10, wherein the instructions, when executed by the one or more processors, further cause the apparatus to perform
determining whether a request to perform the supporting activity is to be expected;
inhibiting the providing the non-availability information to the radio access network node in response to determining that the request to perform the supporting activity is not to be expected.

12. The apparatus according to any of claims 8 to 11, wherein the supporting activity comprises providing a feedback to a prior action related to the machine learning of the machine learning model performed at the radio access network node, and the action comprises evaluating the feedback.

13. The apparatus according to any of claims 7 to 12, wherein the instructions, when executed by the one or more processors, further cause the apparatus to perform
receiving the context information in an initial context setup request.

14. The apparatus according to any of claims 1 to 13, wherein the action comprises at least one of the following:
- performing a first training of the machine learning model by the machine learning; or
- executing a first inference from the machine learning model after a second training of the machine learning model by the machine learning was performed; or
- evaluating a feedback to an executed second inference from the machine learning model after a third training of the machine learning model by the machine learning was performed.
